# EUROPÄISCHE PATENTSCHRIFT

(11) **EP 1 838 489 B1**
(45) Veröffentlichungstag und Bekanntmachung des Hinweises auf die Patenterteilung: **21.03.2012**
(21) Anmeldenummer: 05847514.6
(22) Anmeldetag: 21.12.2005
(51) Int. Cl.: B23K 26/38, F01D 5/18

(54) **VERFAHREN ZUR HERSTELLUNG EINES LOCHS**
METHOD FOR PRODUCING A HOLE
PROCEDE POUR PRATIQUER UN TROU

(30) Priorität: 14.01.2005 EP 05000729
(43) Veröffentlichungstag der Anmeldung: 03.10.2007
(60) Teilanmeldung: 10014448.4
(73) Patentinhaber: SIEMENS AKTIENGESELLSCHAFT, 80333 München (DE)
(72) Erfinder: BECK, Thomas, 16341 Panketal (DE); SETTEGAST, Silke, 10439 Berlin (DE); WOLKERS, Lutz, 14169 Berlin (DE)
(86) Internationale Anmeldenummer: PCT/EP2005/057030
(87) Internationale Veröffentlichungsnummer: WO 2006/074857

(56) Entgegenhaltungen:
- EP-A- 1 522 373
- WO-A-2005/044508
- DE-A1- 10 063 309
- GB-A- 2 389 330
- US-B1- 6 172 331

## Beschreibung

Die Erfindung betrifft ein Verfahren zur Herstellung eines Lochs gemäß Anspruch 1, bei dem mittels gepulster Energiestrahlen in einem Bauteil ein Loch erzeugt wird, und eine Vorrichtung mit Lasern gemäß Anspruch 40.

Bei vielen Bauteilen, insbesondere bei Gussteilen, müssen nachträglich Abtragungen wie Vertiefungen oder Durchgangslöcher erzeugt werden. Insbesondere bei Turbinenbauteilen, die zur Kühlung Filmkühllöcher aufweisen, werden nach der Herstellung des Bauteils Löcher nachträglich eingefügt.

Solche Turbinenbauteile weisen oft auch Schichten auf, wie z.B. eine metallische Schicht oder Zwischenschicht und/oder eine keramische äußere Schicht. Die Filmkühllöcher müssen dann durch die Schichten und das Substrat (Gussteil) hindurch erzeugt werden.

Die US-PS 6,172,331 sowie die US-PS 6,054,673 offenbaren eine Laserbohrmethode, um in Schichtsystemen Löcher einzufügen, wobei ultrakurze Laserpulslängen verwendet werden.

Es wird aus einem bestimmten Laserpulslängenbereich eine Laserpulslänge ausgesucht und damit das Loch erzeugt.

Die DE 100 63 309 A1 offenbart ein verfahren zur Herstellung einer Kühlluftöffnung mittels eines Lasers, bei dem die Laserparameter so eingestellt werden, dass Material durch Sublimieren abgetragen wird.

Die US-PS 5,939,010 offenbart zwei alternative Verfahren zur Erzeugung einer Vielzahl von Löchern. Bei dem einen Verfahren (Fig. 1, 2 der US-PS) wird zuerst vollständig ein Loch erzeugt, bevor das nächste Loch erzeugt wird. In dem zweiten Verfahren werden die Löcher schrittweise erzeugt, indem zuerst ein erster Teilbereich eines ersten Lochs, dann ein erster Teilbereich eines zweiten Lochs usw. erzeugt wird (Fig. 10 der US-PS). Dabei können bei den zwei Verfahren unterschiedliche Pulslängen verwendet werden, aber immer die gleichen Pulslängen innerhalb eines Verfahrens. Die zwei Verfahren können nicht miteinander verknüpft werden.

Die Querschnittsfläche des abzutragenden Bereichs entspricht immer dem Querschnitt des herzustellenden Lochs.

Die US-PS 5,073,687 offenbart die Verwendung eines Lasers zur Herstellung eines Lochs in einem Baut4eil, das aus einem Substrat mit beidseitiger Kupferschicht gebildet ist. Dabei wird zuerst mittels längerer Pulsdauer ein Loch durch einen Kupferfilm erzeugt und dann mittels kürzerer Pulse ein Loch in dem Substrat, bestehend aus einem Harz, wobei anschließend ein Loch durch eine Kupferschicht auf der Rückseite mit höherer Ausgangsleistung des Lasers erzeugt wird. Die Querschnittsfläche des abgetragenen Bereichs entspricht dem Querschnitt des herzustellenden Lochs.

Die US-PS 6,479,788 B1 offenbart ein Verfahren zur Herstellung eines Lochs, bei dem in einem ersten Schritt längere Pulslängen verwendet werden als in einem weiteren Schritt. Die Pulsdauer wird hier variiert, um eine möglichst gute Rechteckform im Loch herzustellen. Dabei wird auch die Querschnittsfläche des Strahls bei abnehmender Pulslänge vergrö-βert.

Die Verwendung von solchen ultrakurzen Laserpulsen ist wegen deren geringen mittleren Leistungen teuer und sehr zeitintensiv.

Es ist daher Aufgabe der Erfindung dieses Problem zu überwinden.

Die Aufgabe wird gelöst durch ein Verfahren gemäß Anspruch 1, bei dem verschiedene Pulslängen verwendet werden, wobei ein Energiestrahl bei den kürzeren Pulslängen verfahren wird. Besonders vorteilhaft ist es, wenn nur in einem der ersten Abtragungsschritte kürzere Pulse verwendet werden, um optimale Eigenschaften in einem äußeren Oberbereich der Trennfläche zu erzeugen, da diese entscheidend sind für das Ausströmverhalten eines Mediums aus dem Loch sowie für das Umströmverhalten eines Mediums um dieses Loch.

Im Inneren des Lochs sind die Eigenschaften der Trennfläche eher unkritisch, sodass dort längere Pulse verwendet werden können, die inhomogene Trennflächen verursachen können.

In den Unteransprüchen des Verfahrens sind weitere vorteilhafte Maßnahmen des Verfahrens aufgelistet.

Die Erfindung wird anhand der Figuren näher erläutert.

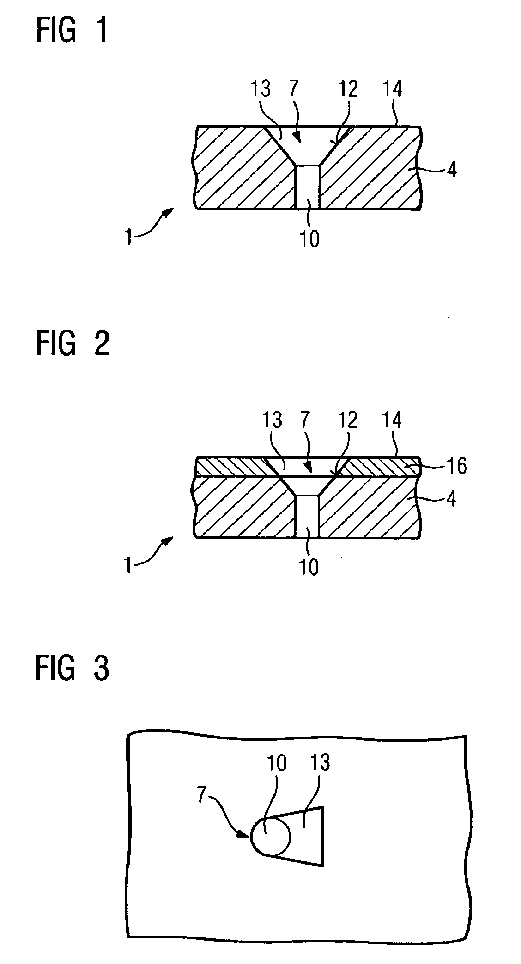

Es zeigen
- Figur 1: ein Loch in einem Substrat,
- Figur 2: ein Loch in einem Schichtsystem,
- Figur 3: eine Draufsicht auf ein herzustellendes Durchgangsloch,

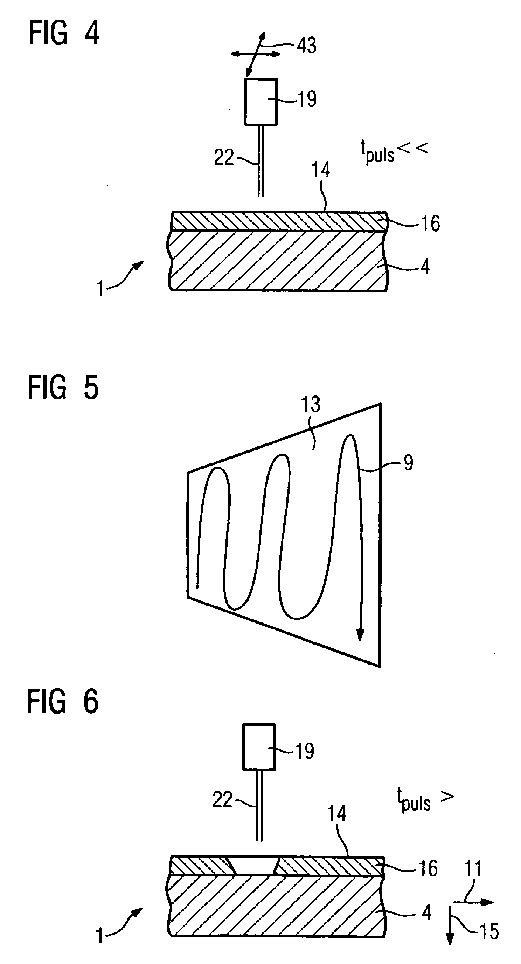

- Figur 4 bis 11: Abtragungsschritte des erfindungsgemäßen Verfahrens,

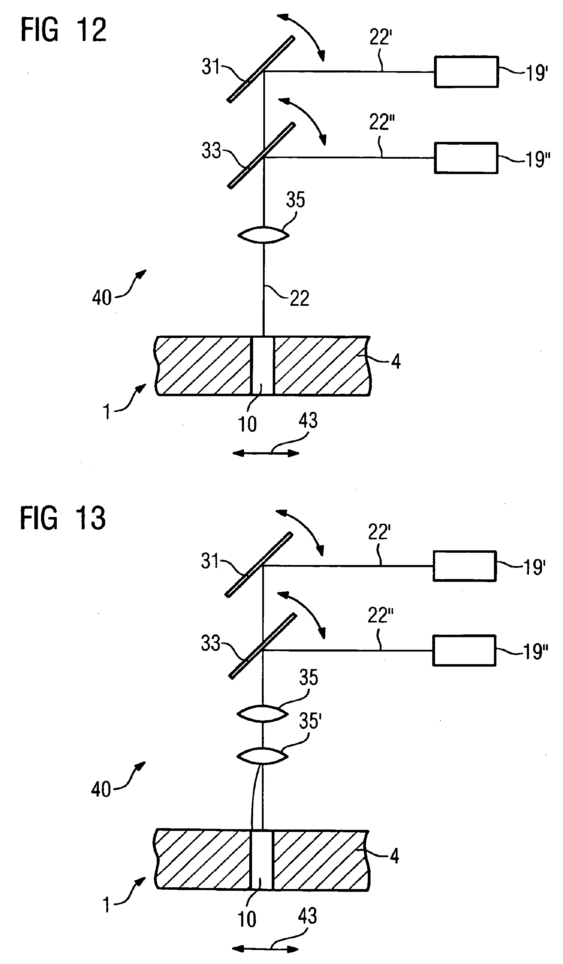

- Figur 12 - 15: Apparaturen, um das Verfahren durchzuführen,

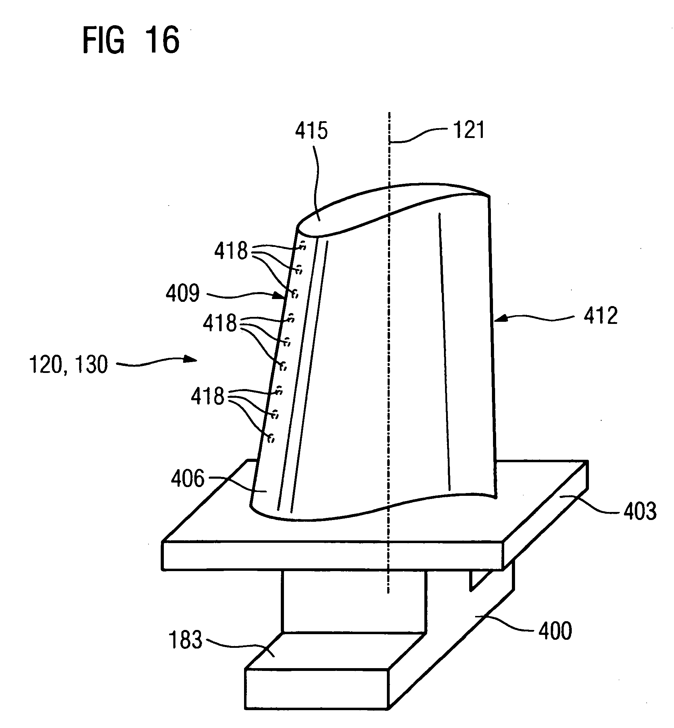

- Figur 16: eine Turbinenschaufel,

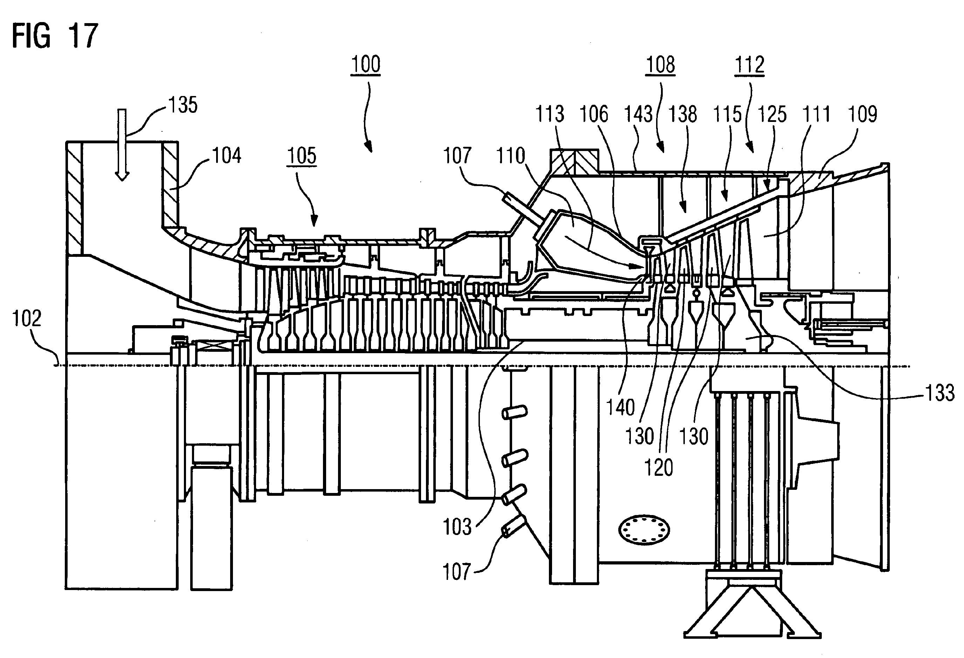

- Figur 17: eine Gasturbine und

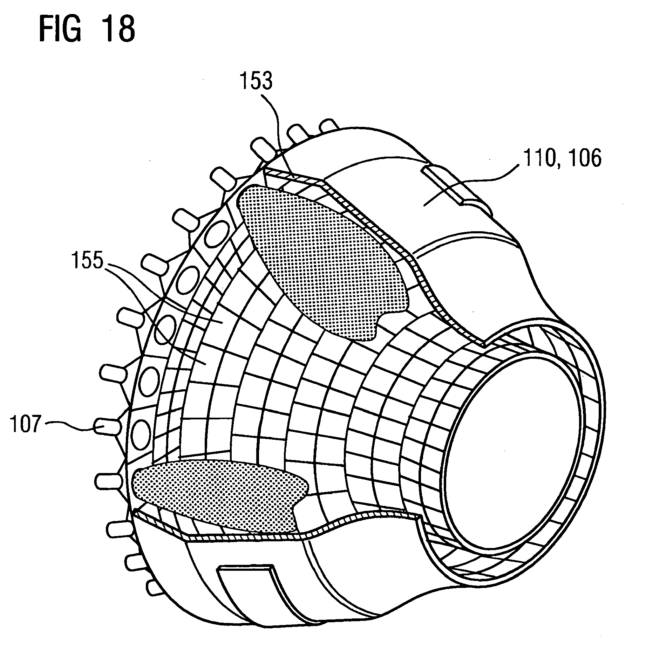

- Figur 18: eine Brennkammer.

### Beschreibung des Bauteils mit Loch

Figur 1 zeigt ein Bauteil 1 mit einem Loch 7.

Das Bauteil 1 besteht aus einem Substrat 4 (beispielsweise ein Gussteil oder DS bzw. SX - Bauteil).

Das Substrat 4 kann metallisch und/oder keramisch sein. Insbesondere bei Turbinenbauteilen, wie z.B. Turbinenlauf- 120 oder -leitschaufeln 130 (Fig. 16, 17), Hitzeschildelementen 155 (Fig. 18) sowie anderen Gehäuseteilen einer Dampf- oder Gasturbine 100 (Figur 17), aber auch einer Flugzeugturbine, besteht das Substrat 4 aus einer nickel-, kobalt- oder eisenbasierten Superlegierung. Bei Turbinenschaufeln für Flugzeuge besteht das Substrat 4 beispielsweise aus Titan oder einer Titan-Basislegierung.

Das Substrat 4 weist ein Loch 7 auf, das beispielsweise ein Durchgangsloch ist. Es kann aber auch ein Sackloch sein.

Das Loch 7 besteht aus einem unteren Bereich 10, der von einer Innenseite des Bauteils 1 ausgeht und der beispielsweise symmetrisch (beispielsweise kreisförmig, oval oder rechteckförmig) ausgebildet ist, und einem oberen Bereich 13, der gegebenenfalls als Diffusor 13 an einer äußeren Oberfläche 14 des Substrats 4 ausgebildet ist. Der Diffusor 13 stellt eine Verbreiterung des Querschnitts gegenüber dem unteren Bereich 10 des Lochs 7 dar.

Das Loch 7 ist z.B. ein Filmkühlloch. Insbesondere die innen liegende Oberfläche 12 des Diffusors 13, also im oberen Bereich des Lochs 7, soll glatt sein, weil Unebenheiten unerwünschte Turbulenzen, Umlenkungen erzeugen, um ein optimales Ausströmen eines Mediums, insbesondere eines Kühlmediums aus dem Loch 7 zu ermöglichen. An die Qualität der Lochoberfläche im unteren Bereich 10 des Lochs 7 werden deutlich geringere Anforderungen gestellt, da das Anströmverhalten hierdurch nur wenig beeinflusst wird.

Figur 2 zeigt ein Bauteil 1, das als Schichtsystem ausgeführt ist.

Auf dem Substrat 4 ist zumindest eine Schicht 16 vorhanden. Dies kann beispielsweise eine metallische Legierung des Typs MCrAlX sein, wobei M für zumindest ein Element der Gruppe Eisen, Kobalt oder Nickel steht. X steht für Yttrium und/oder zumindest ein Element der Seltenen Erden.

Die Schicht 16 kann auch keramisch sein.

Auf der MCrAIX-Schicht kann noch eine weitere Schicht (nicht dargestellt) vorhanden sein, beispielsweise eine keramische Schicht, insbesondere eine Wärmedämmschicht (die MCrAIX-Schicht ist dann eine Zwischenschicht).

Die Wärmedämmschicht ist beispielsweise eine vollständig oder teilstabilisierte Zirkonoxidschicht, insbesondere eine EB-PVD-Schicht oder plasmagespritzte (APS, LPPS, VPS), HVOF oder CGS (cold gas spraying) Schicht.

In dieses Schichtsystem 1 wird ebenfalls ein Loch 7 mit dem unteren Bereich 10 und dem Diffusor 13 eingebracht.

Die vorstehenden Ausführungen zur Herstellung des Lochs 7 gelten für Substrate 4 mit und ohne Schicht 16 oder Schichten 16.

Die Figur 3 zeigt eine Draufsicht auf ein Loch 7.

Der untere Bereich 10 könnte durch ein spanendes Fertigungsverfahren hergestellt werden. Hingegen wäre dies bei dem Diffusor 13 nicht oder nur mit sehr großem Aufwand möglich.

Das Loch 7 kann auch unter einem spitzen Winkel zur Oberfläche 14 des Bauteils 1 verlaufen.

### Verfahren

Die Figuren 4, 5 und 6 zeigen Abtragungsschritte des erfindungsgemäßen Verfahrens.

Erfindungsgemäß werden Energiestrahlen 22 mit verschiedenen Pulslängen während des Verfahrens verwendet.

Der Energiestrahl kann ein Elektronenstrahl, Laserstrahl oder Hochdruckwasserstrahl sein. Im Folgenden wird nur exemplarisch auf den Einsatz eines Lasers eingegangen.

Insbesondere bei einem der ersten Abtragungsschritte werden kürzere Laserpulse (tpuls <<) kleiner gleich 500ns, insbesondere kleiner gleich 100ns verwendet. Es können auch Laserpulslängen im Bereich von Pikosekunden oder Femtosekunden verwendet werden.

Bei der Verwendung von kürzeren Laserpulsen kleiner gleich 500ns (Nanosekunden), insbesondere kleiner gleich 100ns finden nahezu keine Aufschmelzungen im Bereich der Trennfläche statt. Somit bilden sich auf der Innenfläche 12 des Diffusors 13 keine Risse aus und exakte, ebene Geometrien können so erzeugt werden.

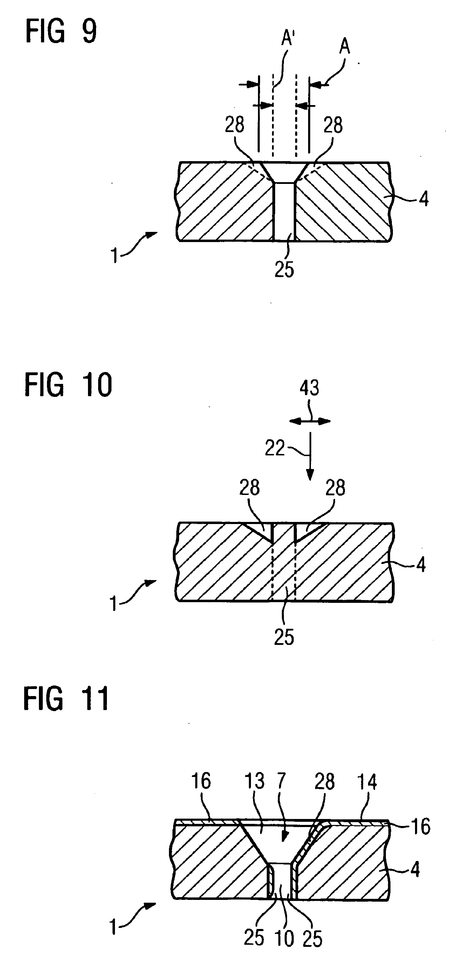

In einem der ersten Abtragungsschritte wird ein erster Teilbereich des Lochs 7 in dem Bauteil 1 erzeugt. Dieser kann beispielsweise zumindest teilweise oder ganz dem Diffusor 13 entsprechen (Fig. 6, 9). Der Diffusor 13 ist größtenteils in einer keramischen Schicht angeordnet. Insbesondere wird zur Erzeugung des gesamten Diffusors 13 eine kürzere Pulslänge verwendet. Insbesondere wird zur Erzeugung des Diffusors 13 eine konstante kürzere Pulslänge verwendet. Die Zeit zur Herstellung des Diffusors 13 entspricht im Verfahren beispielsweise den ersten Abtragungsschritten.

Bei der Erzeugung des Diffusors 13 wird ein Laser 19 mit seinem Laserstrahl 22, in einer lateralen Ebene 43 hin und her verfahren, wie es beispielsweise in Figur 5 dargestellt ist. Der Diffusor 13 wird entlang einer Verfahrlinie 9 beispielsweise mäanderförmig abgefahren, um hier Material in einer Ebene abzutragen (Schritt Fig. 4 nach Fig. 6).

Vorzugsweise, aber nicht notwendigerweise, wenn eine metallische Zwischenschicht oder das Substrat 4 erreicht wird, werden längere Laserpulslängen (tpuls >) größer als 100ns, insbesondere größer als 500ns und insbesondere bis 10ms verwendet, um den restlichen unteren Bereich 10 des Lochs zu erzeugen, wie er in Figur 1 oder 2 dargestellt ist.

Der Diffusor 13 befindet sich zumindest größtenteils in einer keramischen Schicht, kann sich aber auch in eine metallische Zwischenschicht 16 und/oder in das metallische Substrat 4 hinein erstrecken, so dass auch metallisches Material auch noch zum Teil mit kürzeren Pulslängen abgetragen werden kann. Insbesondere werden zur Erzeugung des unteren Bereichs 10 des Lochs 7 größtenteils oder vollständig längere, insbesondere zeitlich konstante, Laserpulse verwendet. Die Zeit zur Herstellung des unteren Bereichs 10 entspricht im Verfahren den letzten Abtragungsschritten.

Bei der Verwendung von längeren Laserpulsen wird der Laser 19 mit seinem Laserstrahl 22 beispielsweise nicht in der Ebene 43 hin und her bewegt. Da sich die Energie aufgrund der Wärmeleitung in dem Material der Schicht 16 oder des Substrats 4 verteilt und durch jeden Laserpuls neue Energie hinzugefügt wird, wird durch Materialverdampfung großflächig Material in der Weise abgetragen, dass die Fläche, in der das Material abgetragen wird, ungefähr der Querschnittsfläche A des herzustellenden Durchgangslochs 7, 10 entspricht. Diese Querschnittsfläche kann über die Energieleistung und Pulsdauer sowie die Führung des Laserstrahls eingestellt werden.

Die Laserpulslängen des einzigen Lasers 19 können beispielsweise kontinuierlich verändert werden, beispielsweise vom Beginn bis zum Ende des Verfahrens. Das Verfahren beginnt mit der Abtragung von Material an der äußeren Oberfläche 14 und endet bei Erreichen der gewünschten Tiefe des Lochs 7.

Das Material wird beispielsweise schichtweise in Ebenen 11 (Fig. 6) und in einer Axialrichtung 15 fortschreitend abgetragen.

Ebenso können die Pulslängen auch diskontinuierlich verändert werden. Vorzugsweise werden zwei verschiedene Pulslängen während des Verfahrens verwendet. Bei den kürzeren Pulslängen (beispielsweise ≤ 500ms) wird der Laser 19 verfahren und bei den längeren Pulslängen (beispielsweise 0,4ms) beispielsweise nicht, weil durch Wärmeleitung der Energieeintrag ohnehin über eine größere Fläche erfolgt, als es dem Querschnitt des Laserstrahls entspricht.

Während der Bearbeitung kann der restliche Teil der Oberfläche mit einer Pulverschicht, insbesondere mit einer Maskierung gemäß der EP 1 510593 A1 geschützt werden. Die Pulver (BN, ZrO2) und die Korngrößenverteilung gemäß der EP 1 510 593 A1 sind Teil dieser Offenbarung.

Dies ist insbesondere dann sinnvoll, wenn ein metallisches Substrat oder ein Substrat mit metallischer Schicht bearbeitet wird, das noch keine keramische Schicht aufweist.

### Laserparameter

Bei der Verwendung von Pulsen mit einer bestimmten Pulslänge ist die Ausgangsleistung des Lasers 19 beispielsweise konstant.

Bei den längeren Pulslängen wird eine Ausgangsleistung des Lasers 19 von mehreren 100 Watt, insbesondere 500 Watt verwendet.

Bei den kürzeren Laserpulslängen wird eine Ausgangsleistung des Lasers 19 von kleiner 300 Watt verwendet.

Bei den längeren Laserpulslängen werden insbesondere eine Laserpulsdauer von 0,4ms und eine Energie (Joule) des Laserpulses von 6J bis 10J, insbesondere 8J verwendet, wobei eine Leistung (Kilowatt) von 10kW bis 50kW, insbesondere 20kW bevorzugt wird.

Die kürzeren Laserpulse weisen eine Energie im einstelligen oder zweistelligen Millijoule-Bereich (mJ) auf, vorzugsweise im einstelligen Millijoule-Bereich, wobei die verwendete Leistung insbesondere meist im einstelligen Kilowattbereich liegt.

### Anzahl Laser

Bei der Herstellung des Durchgangslochs 7 nur ein Laser 19 verwendet , der eine Wellenlänge von 1064nm aufweist und der sowohl die längeren als auch die kürzeren Laserpulse erzeugen kann.

### Abfolge der herzustellenden Lochbereiche

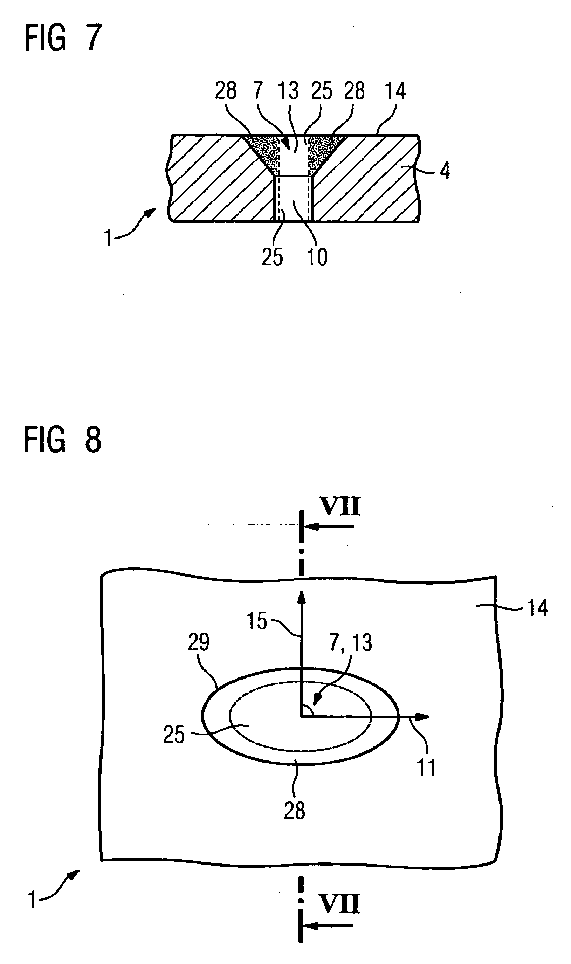

Figur 7 zeigt einen Querschnitt durch ein Loch 7.

Hier erfolgt zuerst eine Grobbearbeitung mit Laserpulslängen größer als 100ns, insbesondere größer 500ns und eine Feinbearbeitung mit Laserpulslängen kleiner gleich 500ns, insbesondere kleiner gleich 100ns.

Der untere Bereich 10 des Lochs 7 wird vollständig und nur ein Bereich des Diffusors 13 wird größtenteils mit einem Laser 19, der Laserpulslängen größer als 100ns, insbesondere größer gleich 500ns aufweist, bearbeitet (erste Abtragungsschritte).

Zur Fertigstellung des Lochs 7 bzw. des Diffusors 13 muss nur noch ein dünner äußerer Randbereich 28 im Bereich des Diffusors 13 mittels eines Lasers 19 der Laserpulslängen kleiner gleich 500ns, insbesondere kleiner 100ns erzeugen kann, bearbeitet werden (letzte Abtragungsschritte).

Dabei wird der Laserstrahl verfahren.

Figur 8 zeigt eine Draufsicht auf ein Loch 7 des Bauteils 1. Die 19, 19', 19" verchiedenen Laserpulslängen des Lasers werden in verschiedenen Abtragungsschritten eingesetzt.

Zuerst erfolgt beispielsweise eine Grobbearbeitung mit großen Laserpulslängen (> 100ns, insbesondere >500ns). Dadurch wird der größte Teil des Lochs 7 erzeugt. Dieser innere Bereich ist mit dem Bezugszeichen 25 gekennzeichnet. Nur noch ein äußerer Randbereich 28 des Lochs 7 bzw. des Diffusors 13 muss entfernt werden, um die Endmaße des Lochs 7 zu erreichen.

Dabei wird des Laserstrahls 22 in der Ebene der Oberfläche 14 verfahren.

Erst wenn der äußere Randbereich 28 mittels eines Lasers 19, 19' mit kürzeren Laserpulslängen (≤ 500ns, insbesondere < 100ns) bearbeitet worden ist, ist das Loch 7 bzw. der Diffusor 13 fertig gestellt.

Die Kontur 29 des Diffusors 13 wird also mit kürzeren Laserpulsen hergestellt, wodurch der äußere Randbereich 28 feiner und exakter abgetragen wird und daher frei von Rissen und Aufschmelzungen ist.

Das Material wird beispielsweise in einer Ebene 11 (senkrecht zur Axialrichtung 15) abgetragen.

Ebenso kann bei den längeren Pulslängen der Querschnitt A des abzutragenden Bereichs bei der Herstellung des Lochs 7 in die Tiefe des Substrats 4 hinein ständig verkleinert werden bis auf A', sodass der äußere Randbereich 28 gegenüber Figur 7 verkleinert ist (Fig. 9). Dies geschieht durch Einstellungen von Energie und Pulsdauer.

Eine Alternative bei der Herstellung des Lochs 7 besteht darin, zuerst den äußeren Randbereich 28 mit kürzeren Laserpulslängen (≤ 500ns) bis zu einer Tiefe in Axialrichtung 15, die einer Ausdehnung des Diffusors 13 des Lochs 7 in dieser Richtung 15 teilweise oder ganz entspricht, zu erzeugen (Fig. 10, der innere Bereich 25 ist gestrichelt angedeutet).

Dabei wird der Laserstrahl 22 in diesen ersten Abtragungssschritten in der Ebene der Oberfläche 14 verfahren.

Somit werden nahezu keine Aufschmelzungen im Bereich der Trennfläche des Diffusors 13 erzeugt und es bilden sich dort keine Risse aus und exakte Geometrien können so erzeugt werden.

Dann erst wird der innere Bereich 25 mit längeren Laserpulslängen (> 100ns, insbesondere > 500ns) abgetragen (letzte Abtragungsschritte).

Das Verfahren kann angewendet werden bei neu hergestellten Bauteilen 1, die zum ersten Mal abgegossen wurden.

Ebenso kann das Verfahren verwendet werden bei wieder aufzuarbeitenden Bauteilen 1.

Wiederaufarbeitung (Refurbishment) bedeutet, dass Bauteile 1, die im Einsatz waren, beispielsweise von Schichten getrennt werden und nach Reparatur wie z.B. Auffüllen von Rissen und Entfernung von Oxidations- und Korrosionsprodukten wieder neu beschichtet werden.

Hier werden beispielsweise Verunreinigungen oder Beschichtungsmaterial, das erneut aufgebracht wurde (Fig. 11) und in die Löcher 7 gelangte, mit einem Laser 19 entfernt. Oder spezielle Ausformungen (Diffusor) im Schichtbereich werden nach der Wiederbeschichtung bei der Aufarbeitung neu hergestellt.

### Wiederaufarbeitung

Figur 11 zeigt die Nachbearbeitung (Refurbishment) eines Lochs 7, wobei bei einer Beschichtung des Substrats 4 mit dem Material der Schicht 16 Material in das bereits vorhandene Loch 7 eingedrungen ist.

Beispielsweise können die tiefer liegenden Bereiche im Bereich 10 des Lochs 7 mit einem Laser bearbeitet werden, der Laserpulslängen größer 100ns, insbesondere größer 500ns aufweist. Diese Bereiche sind mit 25 gekennzeichnet.

Der kritischere Randbereich 28 beispielsweise im Bereich des Diffusors 13, auf dem Verschmutzungen vorhanden sind, wird mit einem Laser 19' bearbeitet, der Laserpulslängen kleiner gleich 500 ns, insbesondere kleiner 100 ns aufweist.

### Vorrichtung

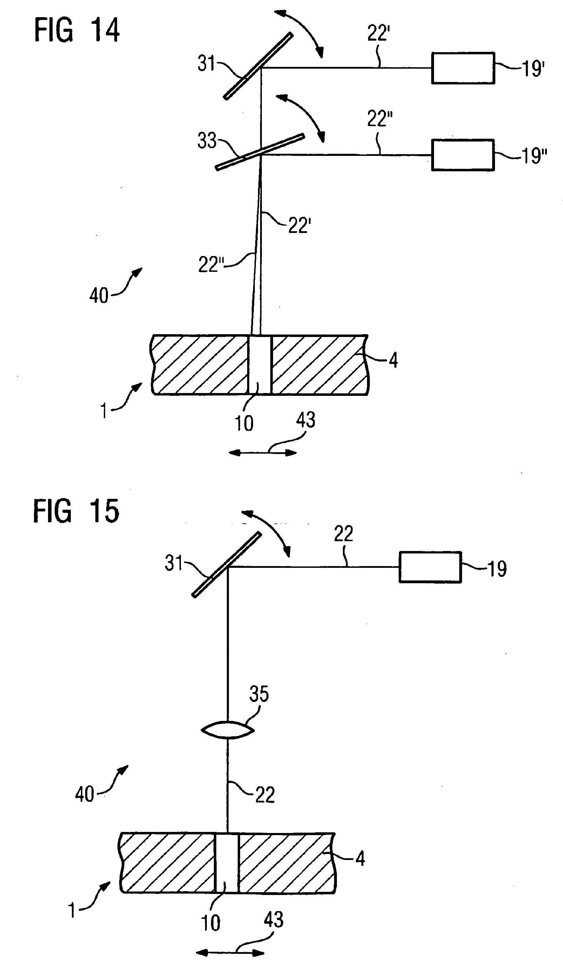

Die Figuren 12 bis 15 zeigen Vorrichtungen 40, wobei jedoch nur die Vorrichtung der Figur 15 ausgebillet ist , um das erfindungsgemäße Verfahren durchzuführen.

Die Vorrichtungen 40 bestehen aus zumindest einer Optik 35, 35', insbesondere zumindest einer Linse 35, 35', die zumindest einen Laserstrahl 22, 22', 22" auf das Substrat 4 lenkt, um das Loch 7 zu erzeugen.

Es sind ein, zwei oder mehr Laser 19, 19', 19" vorhanden. Die Laserstrahlen 22, 22', 22" können über Spiegel 31, 33 zur Optik 35, 35' hingeführt werden.

Die Spiegel 31, 33 sind so verschieb- oder drehbar, dass beispielsweise jeweils nur ein Laser 19', 19" seine Laserstrahlen 22' oder 22" über die Spiegel 31 oder 33 und die Linse 35 auf das Bauteil 1 senden kann.

Das Bauteil 1, 120, 130, 155 oder die Optik 35, 35' oder die Spiegel 31, 33 sind in einer Richtung 43 verfahrbar, so dass der Laserstrahl 22, 22' beispielsweise gemäß Figur 5 über dem Bauteil 1 verfahren wird.

Die Laser 19, 19', 19" können bspw. eine Wellenlängen von entweder 1064nm oder 532nm aufweisen. Die Laser 19', 19" könnten verschiedene Wellenlängen aufweisen: 1064nm und 532nm. Hinsichtlich Pulslänge ist beispielsweise der Laser 19' auf Pulslängen von 0,1 - 5ms einstellbar; hingegen der Laser 19' auf Pulslängen von 50 - 500ns.

Durch Verschieben der Spiegel 31, 33 (Fig. 12, 13, 14) kann jeweils der Strahl des Lasers 19', 19" mit solchen Laserpulslängen über die Optik 35 auf das Bauteil 1 eingekoppelt werden, die notwendig sind, um beispielsweise den äußeren Randbereich 28 oder den Innenbereich 25 herzustellen.

Figur 12 zeigt zwei Laser 19', 19", zwei Spiegel 31, 33 und eine Optik in Form einer Linse 35.

Wird beispielsweise zuerst der äußere Randbereich 28 gemäß Figur 6 hergestellt, so wird der erste Laser 19' mit den kürzeren Laserpulslängen eingekoppelt.

Wird dann der innere Bereich 25 hergestellt, so wird durch Bewegung des Spiegels 31 der erste Laser 19' ausgekoppelt und durch Bewegung des Spiegels 33 der zweite Laser 19" mit seinen längeren Laserpulslängen eingekoppelt.

Figur 13 zeigt eine ähnliche Vorrichtung wie in Figur 12, jedoch sind hier zwei Optiken, hier beispielsweise zwei Linsen 35, 35' vorhanden, die es erlauben, dass die Laserstrahlen 22', 22 " der Laser 19', 19" auf verschiedene Bereiche 15, 28 des Bauteils 1, 120, 130, 155 gleichzeitig gelenkt werden.

Wenn beispielsweise ein äußerer Randbereich 28 erzeugt wird, kann der Laserstrahl 22' auf eine erste Stelle dieses mantelförmigen Bereiches 28 und auf zu der ersten Stelle diametral gegenüberliegenden zweiten Stelle gelenkt werden, sodass die Bearbeitungszeit erheblich verkürzt wird.

Es kann die Optik 35 für die ersten Laserstrahlen 22' und die zweite Optik 35' für die zweiten Laserstrahlen 22" genutzt werden.

Gemäß dieser Vorrichtung 40 könnten die Laser 19', 19" nacheinander oder gleichzeitig mit gleichen oder verschiedenen Laserpulslängen benutzt werden.

In Figur 14 sind keine Optiken in Form von Linsen vorhanden, sondern nur Spiegel 31, 33, die die Laserstrahlen 22', 22" auf das Bauteil 1 lenken und durch Bewegung dazu benutzt werden, dass zumindest Laserstrahl 22', 22 " in einer Ebene über das Bauteil verfahren wird.

Die Laser 19', 19" können hier ebenfalls gleichzeitig benutzt werden.

Gemäß dieser Vorrichtung 40 könnten die Laser 19', 19" nacheinander oder gleichzeitig mit gleichen oder verschiedenen Laserpulslängen benutzt werden.

Figur 15 zeigt eine Vorrichtung 40 mit nur einem Laser 19, bei dem Laserstrahl 22 beispielsweise über einen Spiegel 31 auf ein Bauteil 1 gelenkt wird.

Auch hier ist eine Optik beispielsweise in Form einer Linse nicht notwendig. Der Laserstrahl 22 wird beispielsweise durch Bewegung des Spiegels 31 über die Oberfläche des Bauteils 1 verfahren. Dies ist bei der Verwendung von kürzeren Laserpulslängen notwendig. Bei den längeren Laserpulslängen muss der Laserstrahl 22 nicht notwendigerweise verfahren werden, sodass der Spiegel 31 nicht bewegt wird, wie es im Verfahrensstadium.

Ebenso können aber auch in der Vorrichtung gemäß Figur 15 eine Linse oder zwei Linsen 35, 35' verwendet werden um den Laserstrahl gleichzeitig auf verschiedene Bereiche 25, 28 des Bauteils 1, 120, 130, 155 zu lenken.

### Bauteile

Figur 16 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle (5X) gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (D9) (directionally solidified structures).

Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrAIX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAIX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

Die Figur 17 zeigt beispielhaft eine Gasturbine 100 in einem Längsteilschnitt.

Die Gasturbine 100 weist im Inneren einen um eine Rotationsachse 102 drehgelagerten Rotor 103 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hinter einander geschaltete Turbinenstufen 112 die Turbine 108.

Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.

Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, werden diese mittels eines Kühlmittels gekühlt.

Ebenso können die Substrate eine gerichtete Struktur aufweisen, d.h. sie sind einkristallin (SX-Struktur) oder weisen nur längsgerichtete Körner auf (DS-Struktur).

Als Material werden eisen-, nickel- oder kobaltbasierte Superlegierungen verwendet.

Ebenso können die Schaufeln 120, 130 Beschichtungen gegen Korrosion (MCrAIX; M ist zumindest ein Element der Gruppe Eisen (Fe), Kobalt (Co), Nickel (Ni), X steht für Yttrium (Y) und/oder zumindest ein Element der Seltenen Erden) und Wärme durch eine Wärmedämmschicht aufweisen. Die Wärmedämmschicht besteht beispielsweise ZrO2, Y2O4-ZrO2, d.h. sie ist nicht teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 18 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000(C bis 1600(C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Auch die Hitzeschildelemente 155 können Löcher 7 beispielsweise auch mit einem Diffusor 13 aufweisen, um das Hitzeschildelement 155 zu kühlen oder um brennbares Gas ausströmen zu lassen.

Die Materialien der Brennkammerwand und deren Beschichtungen können ähnlich der Turbinenschaufeln sein.

## Patentansprüche

1. Verfahren zur Herstellung eines Lochs (7) in einem Schichtsystem (1, 120, 130, 155), das Schichtsystem (1) zumindest aus einem metallischen Substrat (4) und einer äußersten keramischen Schicht besteht,
mittels einem gepulsten Laserstrahl (22) eines Lasers (19)
der eine Pulslänge aufweist, wobei nur ein Laser (19) mit einer Wellenlänge von 1064nm verwendet wird,
**dadurch gekennzeichnet, dass** das Verfahren in einer Vielzahl von Abtragungsschritten ausgeführt wird und in einem der ersten Abtragungsschritte andere Pulslängen verwendet werden als in einem der letzten Abtragungs- schritte,
dass bei den Abtragungsschritten mit kürzeren Pulslängen der eine Laserstrahl (22) über die Oberfläche des Bauteils ((1, 120, 130, 155)) verfahren wird,
um Material im Bereich einer Ebene des herzustellenden Lochs (7) abzutragen und
dass längere Pulslängen verwendet werden,
um eine metallische Zwischenschicht (16) oder das metallische Substrat (4) abzutragen.

2. Verfahren nach Anspruch 1,
**dadurch gekennzeichnet, dass**
während der ersten Abtragungsschritte längere Pulslängen verwendet werden als in einem der letzten Abtragungsschritte.

3. Verfahren nach Anspruch 1,
**dadurch gekennzeichnet, dass**
während der ersten Abtragungsschritte kürzere Pulslängen verwendet werden als in einem der letzten Abtragungsschritte.

4. Verfahren nach Anspruch 1, 2 oder 3,
**dadurch gekennzeichnet, dass**
die Pulslänge während des Fortschreitens des Verfahrens zur Erzeugung des Lochs (7) kontinuierlich verändert wird.

5. Verfahren nach Anspruch 1, 2 oder 3,
**dadurch gekennzeichnet, dass**
die Pulslänge während des Fortschreitens des Verfahrens zur Erzeugung des Lochs (7) diskontinuierlich verändert wird.

6. Verfahren nach Anspruch 1 oder 5,
**dadurch gekennzeichnet, dass**
nur zwei verschiedene Pulslängen verwendet werden.

7. Verfahren nach Anspruch 1,
**dadurch gekennzeichnet, dass**
bei den längeren Pulsdauern der eine Laserstrahl (22) nicht über die Oberfläche des Bauteils (1, 120, 130, 155) verfahren wird.

8. Verfahren nach Anspruch 1 oder 3,
**dadurch gekennzeichnet, dass**
während der ersten Abtragungsschritte Pulslängen kleiner gleich 500ns, insbesondere kleiner gleich 100ns, und in einem der letzten Abtragungsschritte Pulslängen größer 100ns, insbesondere größer 500ns, aber insbesondere kleiner 10ms verwendet werden.

9. Verfahren nach Anspruch 1 oder 2,
**dadurch gekennzeichnet, dass**
während der ersten Abtragungsschritte Pulslängen größer 100ns, insbesondere größer 500ns, aber insbesondere kleiner 10ms
und in einem der letzten Abtragungsschritte Pulslängen kleiner gleich 500ns, insbesondere kleiner gleich 100ns, verwendet werden.

10. Verfahren nach Anspruch 1, 3 oder 8,
**dadurch gekennzeichnet, dass**
zuerst ein äußerer Oberbereich (13) des Lochs (7) mit kürzeren Pulslängen,
und dann ein unterer Bereich (10) des Lochs (7) mit längeren Pulslängen erzeugt wird.

11. Verfahren nach Anspruch 1, 3 oder 8,
**dadurch gekennzeichnet, dass**
zuerst ein äußerer Randbereich (28) mit kürzeren Pulslängen erzeugt wird
und dann ein innerer Bereich (25) des Lochs (7) mit längeren Pulslängen erzeugt wird.

12. Verfahren nach Anspruch 1, 2 oder 9,
**dadurch gekennzeichnet, dass**
zuerst ein innerer Bereich (25) mit kürzeren Pulslängen, und dann ein äußerer Randbereich (28) des Lochs (7) mit längeren Pulslängen erzeugt wird.

13. Verfahren nach einem der Ansprüche 1 bis 7,
**dadurch gekennzeichnet,**
**dass** ausgehend von einer Oberfläche (14) des Bauteils (1) das Loch (7) hergestellt wird und
**dass** von der äußeren Oberfläche (14) hin bis zur Tiefe des Lochs (7) die Pulslänge verändert wird.

14. Verfahren nach einem der Ansprüche 1, 2, 4-7, 8-14,
**dadurch gekennzeichnet, dass**
bei den längeren Pulsen eine Pulsdauer von 0,4ms verwendet wird.

15. Verfahren nach einem der Ansprüche 1, 2, 4 - 7, 8, 14
**dadurch gekennzeichnet, dass**
die längeren Pulse eine Energie von 6 bis 10 Joule, insbesondere 8 Joule aufweisen.

16. Verfahren nach einem der Ansprüche 1, 2, 4 - 7, 8, 15
**dadurch gekennzeichnet, dass**
die längeren Pulse eine Leistung von 10 bis 50 Kilowatt, insbesondere 20 Kilowatt aufweisen.

17. Verfahren nach einem der Ansprüche 1, 3, 5, 6, 8, 13,
**dadurch gekennzeichnet, dass**
die Energie der kürzeren Pulse im oder unter dem zweistelligen, insbesondere im einstelligen Millijoule-Bereich liegt.

18. Verfahren nach Anspruch 1, 3, 5, 6, 8-13 oder 17,
**dadurch gekennzeichnet, dass**
die kürzeren Pulse eine Leistung im einstelligen Kilowattbereich aufweisen.

19. Verfahren nach einem der Anspruch 1, 2-4, 7, 8, 16
**dadurch gekennzeichnet, dass**
bei den längeren Pulsen die Querschnittsfläche (A) des abgetragenen Bereichs auf dem Bauteil (1) der Querschnittsfläche des herzustellenden Lochs (7, 10) entspricht.

20. Verfahren nach einem oder mehreren der vorherigen Ansprüche,
**dadurch gekennzeichnet, dass**
bei der Verwendung von längeren oder kürzeren Pulsen (16) eine Ausgangsleistung des Lasers (19) konstant ist, solange die Pulslänge für die längeren oder kürzeren Pulse sich nicht ändert.

21. Verfahren nach einem oder mehreren der vorherigen ansprüche,
**dadurch gekennzeichnet, dass**
bei den längeren Pulsen eine Ausgangsleistung des Lasers (19) von mehreren 100 Watt,
insbesondere von 500 Watt verwendet wird.

22. Verfahren nach einem oder mehreren der vorherigen Ansprüche,
**dadurch gekennzeichnet, dass**
bei den kürzeren Pulsen eine Ausgangsleistung des Lasers (19) kleiner 300 Watt ist.

23. Verfahren nach Anspruch 1,
**dadurch gekennzeichnet, dass**
mit dem Verfahren ein Bauteil (1) bearbeitet wird, welches ein Schichtsystem darstellt.

24. Verfahren nach Anspruch 23,
24 **dadurch gekennzeichnet, dass**
mit dem Verfahren ein Schichtsystem (1) bearbeitet wird, das aus einem metallischen Substrat (4) und zumindest einer keramischen Schicht (16) besteht.

25. Verfahren nach Anspruch 23 oder 24,
**dadurch gekennzeichnet, dass**
das Schichtsystem (1) aus einem Substrat (4) und einer metallischen Schicht (16) besteht,
die insbesondere eine Zusammensetzung des Typs MCrAlX aufweist,
wobei M für zumindest ein Element der Gruppe Eisen, Kobalt oder Nickel steht,
sowie X für Yttrium und/oder zumindest ein Element der Seltenen Erden steht.

26. Verfahren nach Anspruch 24 oder 25,
**dadurch gekennzeichnet, dass**
das Schichtsystem (1) aus einem Substrat (4) und einer Schicht (16) besteht,
die eine metallische Zwischenschicht und eine äußere keramische Schicht aufweist.

27. Verfahren nach Anspruch 24 oder 26,
**dadurch gekennzeichnet, dass**
die keramische Schicht eine Wärmedämmschicht ist.

28. Verfahren nach Anspruch 24, 25, 26 oder 27,
**dadurch gekennzeichnet, dass**
das Substrat (4) eine nickel-, kobalt- oder eisenbasierte Superlegierung ist.

29. Verfahren nach Anspruch 1 oder 23,
**dadurch gekennzeichnet, dass**
mit dem Verfahren ein Bauteil (1) bearbeitet wird, das eine Turbinenschaufel (120, 130),
ein Hitzeschildelement (155) oder
ein anderes Bau- oder Gehäuseteil
einer Gas- (100) oder Dampfturbine ist.

30. Verfahren nach Anspruch 1 oder 29,
**dadurch gekennzeichnet, dass**
das Verfahren bei der Neuherstellung eines Bauteils (1, 120, 130, 155) verwendet wird.

31. Verfahren nach Anspruch 1 oder 29,
**dadurch gekennzeichnet, dass**
das Verfahren bei einem wieder auf zuarbeitenden Bauteil (1, 120, 130, 155) verwendet wird.

## Claims

1. Method for producing a hole (7) in a coating system (1, 120, 130, 155), the coating system (1) comprising at least one metallic substrate (4) and an outermost ceramic coating, by means of a pulsed laser beam (22) of a laser (19),
which has a pulse length, only one laser (19) with a wavelength of 1064 nm being used,
**characterized in that**
the method is implemented in a multiplicity of material removal steps and, in one of the first material removal steps, different pulse lengths are used than in one of the last material removal steps,
**in that** during the material removal steps with shorter pulse lengths the one laser beam (22) is moved over the surface of the component (1, 120, 130, 155),
in order to remove material in the region of a plane of the hole (7) which is to be produced, and
**in that** longer pulse lengths are used
in order to remove a metallic intermediate coating (16) or the metallic substrate (4).

2. Method according to Claim 1,
**characterized in that**
longer pulse lengths are used during the first material removal steps than in one of the last material removal steps.

3. Method according to Claim 1,
**characterized in that**
shorter pulse lengths are used during the first material removal steps than in one of the last material removal steps.

4. Method according to Claim 1, 2 or 3,
**characterized in that**
the pulse length during the progressing of the method for producing the hole (7) is continuously altered.

5. Method according to Claim 1, 2 or 3,
**characterized in that**
the pulse length during the progressing of the method for producing the hole (7) is discontinuously altered.

6. Method according to Claim 1 or 5,
**characterized in that**
only two different pulse lengths are used.

7. Method according to Claim 1,
**characterized in that**
during the longer pulse durations, the one laser beam (22) is not moved over the surface of the component (1, 120, 130, 155).

8. Method according to Claim 1 or 3,
**characterized in that**
during the first material removal steps, pulse lengths which are less than or equal to 500 ns, especially less than or equal to 100 ns are used, and in one of the last material removal steps, pulse lengths which are greater than 100 ns, especially greater than 500 ns, but especially less than 10 ms, are used.

9. Method according to Claim 1 or 2,
**characterized in that**
during the first material removal steps, pulse lengths which are greater than 100 ns, especially greater than 500 ns, but especially less than 10 ms, are used, and in one of the last material removal steps, pulse lengths which are less than or equal to 500 ns, especially less than or equal to 100 ns, are used.

10. Method according to Claim 1, 3 or 8,
**characterized in that**
an outer upper region (13) of the hole (7) is first produced with shorter pulse lengths,
and then a lower region (10) of the hole (7) is produced with longer pulse lengths.

11. Method according to Claim 1, 3 or 8,
**characterized in that**
an outer edge region (28) is first produced with shorter pulse lengths
and then an inner region (25) of the hole (7) is produced with longer pulse lengths.

12. Method according to Claim 1, 2 or 9,
**characterized in that**
an inner region (25) is first produced with shorter pulse lengths,
and then an outer edge region (28) of the hole (7) is produced with longer pulse lengths.

13. Method according to one of Claims 1 to 7,
**characterized in that**
the hole (7) is produced from a surface (14) of the component (1) and
**in that** the pulse length is varied from the outer surface (14) to the depth of the hole (7).

14. Method according to one of Claims 1, 2, 4 - 7, 8 - 13,
**characterized in that**
with the longer pulses, a pulse duration of 0.4 ms is used.

15. Method according to one of Claims 1, 2, 4 - 7, 8 - 14,
**characterized in that**
the longer pulses have an energy of 6 to 10 Joules, especially 8 Joules.

16. Method according to one of Claims 1, 2, 4 - 7, 8 - 15,
**characterized in that**
the longer pulses have a power output of 10 to 50 Kilowatts, especially 20 Kilowatts.

17. Method according to one of Claims 1, 3, 5, 6, 8 - 13,
**characterized in that**
the energy of the shorter pulses lies in or below the two-digit Millijoule range, especially in the one-digit Millijoule range.

18. Method according to one of Claims 1, 3, 5, 6, 8 - 13 or 17,
**characterized in that**
the shorter pulses have a power output in the one-digit Kilowatt range.

19. Method according to one of Claims 1, 2 - 4, 7, 8 - 16,
**characterized in that**
with the longer pulses, the cross sectional area (A) of the region on the component (1) from which material is removed corresponds to the cross sectional area of the hole (7, 10) which is to be produced.

20. Method according to one or more of the preceding claims,
**characterized in that**
when using longer or shorter pulses (16), a power output of the laser (19) is constant as long as the pulse length for the longer or shorter pulses is not altered.

21. Method according to one or more of the preceding claims,
**characterized in that**
with the longer pulses, a power output of the laser (19) of several 100 Watts, of especially 500 Watts, is used.

22. Method according to one or more of the preceding claims,
**characterized in that**
with the shorter pulses, a power output of the laser (19) is less than 300 Watts.

23. Method according to Claim 1,
**characterized in that**
a component (1) is machined by the method, which component represents a coating system.

24. Method according to Claim 23,
**characterized in that**
a coating system (1) is machined by the method, which coating system comprises a metallic substrate (4) and at least one ceramic coating (16).

25. Method according to Claim 23 or 24,
**characterized in that**
the coating system (1) comprises a substrate (4) and a metallic coating (16),
which especially has a composition of the MCrAlX type, wherein M represents at least one element of the iron, cobalt or nickel group,
and also X represents yttrium and/or at least one element of the rare earths.

26. Method according to Claim 24 or 25,
**characterized in that**
the coating system (1) comprises a substrate (4) and a coating (16),
which has a metallic intermediate coating and an outer ceramic coating.

27. Method according to Claim 24 or 26,
**characterized in that**
the ceramic coating is a thermal barrier coating.

28. Method according to Claim 24, 25, 26 or 27,
**characterized in that**
the substrate (4) is a nickel-based, cobalt-based or iron-based superalloy.

29. Method according to Claim 1 or 23,
**characterized in that**
a component (1) is machined by the method,
which component is a turbine blade (120, 130),
a heat shield element (155) or
another component part or casing part of a gas turbine (100) or steam turbine.

30. Method according to Claim 1 or 29,
**characterized in that**
the method is used during the new production of a component (1, 120, 130, 155).

31. Method according to Claim 1 or 29,
**characterized in that**
the method is used with a component (1, 120, 130, 155) which is to be refurbished.

## Revendications

1. Procédé pour pratiquer un trou ( 7 ) dans un système ( 1, 120, 130, 155 ) stratifié, le système ( 1 ) stratifié étant constitué d'au moins un substrat ( 4 ) métallique et d'une couche céramique la plus extérieure au moyen d'un faisceau ( 22 ) pulsé d'un laser ( 19 ),
qui a une longueur d'impulsion, seul un laser ( 19 ) ayant une longueur d'onde de 1064nm étant utilisé,
**caractérisé en ce qu'**on effectue le procédé en une pluralité de stades d'enlèvement de matière, et
dans l'un des premiers stades d'enlèvement de matière, on utilise des longueurs d'impulsion autres que dans l'un des derniers stades d'enlèvement de matière,
**en ce que** dans les stades d'enlèvement de matière ayant les longueurs d'impulsion les plus petites, on déplace un faisceau ( 22 ) laser sur la surface de l'élément ( 1, 120, 130, 155 ), pour enlever de la matière dans la zone d'un plan du trou ( 7 ) à pratiquer, et
**en ce que** l'on utilise les longueurs d'impulsion les plus grandes,
pour enlever une couche ( 16 ) métallique intermédiaire ou le substrat ( 4 ) métallique.

2. Procédé suivant la revendication 1,
**caractérisé en ce que**
pendant les premiers stades d'enlèvement de matière, on utilise des longueurs d'impulsion plus grandes que dans l'un des derniers stades d'enlèvement de matière.

3. Procédé suivant la revendication 1,
**caractérisé en ce que**
pendant les premiers stades d'enlèvement de matière, on utilise des longueurs d'impulsion plus petites que dans l'un des derniers stades d'enlèvement de matière.

4. Procédé suivant la revendication 1, 2 ou 3,
**caractérisé en ce que**
l'on modifie continuellement les longueurs d'impulsion pendant que se poursuit le procédé de production du trou ( 7 ).

5. Procédé suivant la revendication 1, 2 ou 3,
**caractérisé en ce que**
on modifie d'une manière discontinue les longueurs d'impulsion pendant que se poursuit le procédé de production du trou ( 7 ).

6. Procédé suivant la revendication 1 ou 5,
**caractérisé en ce que**
on utilise deux longueurs d'impulsion différentes.

7. Procédé suivant la revendication 1,
**caractérisé en ce que**
aux durées d'impulsion les plus grandes, on ne déplace pas un faisceau ( 22 ) laser sur la surface de l'élément ( 1, 120, 130, 155 ).

8. Procédé suivant l'une des revendications 1 à 3,
**caractérisé en ce que**
pendant les premiers stades d'enlèvement de matière, on utilise des longueurs d'impulsion inférieures ou égales à 500ns, notamment inférieures ou égales à 100ns et, dans l'un des derniers stades d'enlèvement de matière, on utilise des longueurs d'impulsion plus grandes que 100ns, notamment plus grandes que 500ns, mais notamment plus petites que 10ms.

9. Procédé suivant la revendication 1 ou 2,
**caractérisé en ce que**
pendant les premiers stades d'enlèvement de matière, on utilise des longueurs d'impulsion plus grandes que 100ns, notamment plus grandes que 500ns, mais notamment plus petites que 10ms,
et dans l'un des derniers stades d'enlèvement de matière, on utilise des longueurs d'impulsion inférieures ou égales à 500ns, notamment inférieures ou égales à 100ns.

10. Procédé suivant la revendication 1, 3 ou 8,
**caractérisé en ce que**
on produit d'abord une partie ( 13 ) supérieure la plus à l'extérieure du trou ( 7 ) par des petites longueurs d'impulsion,
et on produit ensuite une partie ( 10 ) inférieure du trou ( 7 ) par des longueurs d'impulsion plus grandes.

11. Procédé suivant la revendication 1, 3 ou 8,
**caractérisé en ce que**
on produit d'abord une partie ( 28 ) marginale la plus extérieure par des longueurs d'impulsion plus petites,
et on produit ensuite une partie ( 25 ) intérieure du trou ( 7 ) par des longueurs d'impulsion plus grandes.

12. Procédé suivant la revendication 1, 2 ou 9,
**caractérisé en ce que**
on produit d'abord une partie ( 25 ) intérieure par des longueurs d'impulsion plus petites
et ensuite une partie ( 8 ) marginale extérieure du trou ( 7 ) par des longueurs d'impulsion plus grandes.

13. Procédé suivant l'une des revendications 1 à 7,
**caractérisé en ce que**
on pratique le trou ( 7 ) en partant d'une surface ( 14 ) de l'élément ( 1 ), et
**en ce que** l'on modifie la longueur des impulsions de la surface ( 14 ) extérieure jusqu'à la profondeur du trou ( 7 ).

14. Procédé suivant l'une des revendications 1, 2, 4 à 7, 8 à 13,
**caractérisé en ce que**
pour les longueurs d'impulsion les plus grandes on utilise une durée d'impulsion de 0,4ms.

15. Procédé suivant l'une des revendications 1, 2, 4 à 7, 8 à 14,
**caractérisé en ce que**
les impulsions les plus longues ont une énergie de 6 à 10 joule, notamment de 8 joule.

16. Procédé suivant l'une des revendications 1, 2, 4 à 7, 8 à 15,
**caractérisé en ce que**
les impulsions les plus longues ont une puissance de 10 à 50 kilowatt, notamment de 20 kilowatt.

17. Procédé suivant l'une des revendications 1, 3, 5, 6, 8 à 13,
**caractérisé en ce que**
l'énergie des impulsions les plus courtes est dans la plage ou inférieure à la plage des millejoule à deux chiffres, notamment dans la plage des millejoule à un chiffre.

18. Procédé suivant l'une des revendications 1, 3, 5, 6, 8 à 13 ou 17,
**caractérisé en ce que**
les impulsions les plus courtes ont une puissance dans la plage des kilowatt à un chiffre.

19. Procédé suivant l'une des revendications 1, 2 à 4, 7, 8 à 16,
**caractérisé en ce que**
pour les impulsions les plus longues, la surface ( A ) de section transversale de la partie, dont on a enlevé de la matière sur l'élément ( 1 ), correspond à la surface de section transversale du trou ( 7, 10 ) à pratiquer.

20. Procédé suivant l'une ou plusieurs revendications précédentes,
**caractérisé en ce que**
lors de l'utilisation d'impulsions ( 16 ) plus longues ou plus courtes, une puissance de sortie du laser ( 19 ) est constante tant que la longueur des impulsions plus longues ou plus courtes ne se modifie pas.

21. Procédé suivant l'une ou plusieurs revendications précédentes,
**caractérisé en ce que**
pour les impulsions les plus longues, on utilise une puissance de sortie du laser ( 19 ) de plusieurs centaines de watt, notamment de 500 watt.

22. Procédé suivant l'une ou plusieurs revendications précédentes,
**caractérisé en ce que**
pour les impulsions les plus courtes, une puissance de sortie du laser ( 19 ) est inférieure à 300 watt.

23. Procédé suivant la revendication 1,
**caractérisé en ce que**
par le procédé on usine un élément ( 1 ) qui constitue un système stratifié.

24. Procédé suivant la revendication 23,
**caractérisé en ce que**
par le procédé on usine un système ( 1 ) stratifié qui est constitué d'un substrat ( 4 ) métallique et d'au moins une couche ( 16 ) en céramique.

25. Procédé suivant la revendication 23 ou 24,
**caractérisé en ce que**
le système ( 1 ) stratifié est constitué un substrat ( 4 ) et d'une couche ( 16 ) métallique,
qui a notamment une composition du type MCRalX,
dans lequel M représente au moins un élément du groupe fer, cobalt ou nickel,
tandis que X représente l'yttrium et/ou au moins un élément des terres rares.

26. Procédé suivant la revendication 24 ou 25,
**caractérisé en ce que**
le système ( 1 ) stratifié est constitué d'un substrat ( 4 ) et d'une couche ( 16 )
laquelle a une couche métallique intermédiaire et une couche extérieure en céramique.

27. Procédé suivant la revendication 24 ou 26,
**caractérisé en ce que**
la couche en céramique est une couche calorifuge.

28. Procédé suivant la revendication 24, 25, 26 ou 27,
**caractérisé en ce que**
le substrat ( 4 ) est un superalliage à base de nickel, de cobalt ou de fer.

29. Procédé suivant la revendication 1 ou 23,
**caractérisé en ce que**
on usine par le procédé un élément ( 1 ),
qui est une aube ( 120, 130 ) de turbine,
un élément ( 155 ) de bouclier thermique ou
un autre élément ou partie de carter d'une turbine à gaz ( 100 ) ou à vapeur.

30. Procédé suivant l'une des revendications 1 à 29,
**caractérisé en ce que**
on utilise le procédé lors de la production à nouveau d'un élément ( 1, 120, 130, 155 ).

31. Procédé suivant la revendication 1 ou 29,
**caractérisé en ce que**
on utilise le procédé lors du retraitement d'un élément ( 1, 120, 130, 155 ).
